# EUROPEAN PATENT APPLICATION

(11) **EP 4 667 074 A1**
(43) Date of publication of application: **24.12.2025**
(21) Application number: 24183583.4
(22) Date of filing: 21.06.2024
(51) Int. Cl.: A63F 13/655, G06Q 30/00, G06T 13/40, H04N 7/14

(54) **METHODS FOR RECORDING OF DATA FOR GENERATING AN AVATAR, METHOD FOR GENERATING AN AVATAR AND COMPUTER PROGRAM PRODUCT**

(71) Applicant: Copresence AG, 8001 Zürich (CH)
(72) Inventor: Hormann, Luca Oliver, 69120 Heidelberg (DE); O'Connor, Stephen, 10961 Berlin (DE); Manthey, Merlin, 24340 Eckernförde (DE); Ardizzone, Lynton, 69221 Dossenheim (DE); Grassal, Philip-William, 8038 Zürich (CH); Mackowiak, Radek Jakob, 8003 Zürich (CH); Leistner, Titus, 69124 Heidelberg (DE)
(74) Representative: Hepp Wenger Ryffel AG

(57) **Abstract**

A method for recording of data of a user for generating an avatar comprising recording a plurality of images representing different poses of a user's head. For recording the poses of a user's head, the orientation of the user's head is observed continuously by a camera and at least one high-resolution image is automatically recorded when preset orientations of the user's head are reached.

## Description

The present disclosure relates to methods for recording of data of a user for generating an avatar, a method for generating an avatar of a user and a computer program product that cause a computer to carry out the methods according to the headings of the independent claims.

Methods of capturing data and processing them to create an avatar of a user are well known.

WO 2017/029488 A2 discloses the recording of single images having a neutral face expression and provides real-time feedback mechanism to the user. However, the recording of the data is cumbersome and not very user friendly.

US 11,170,552 B2 discloses the recording of various images of a user, while each image taken comprises a depth map. However, not each camera system used today delivers the needed depth map, therefore the recording is bound to specific camera types.

US 2021/0065420 A1 discloses the recording of data using continuous video recording. Therefore, a huge amount of data is gathered which requires large processing capabilities.

It is the task of the invention to overcome the disadvantages of the prior art. In particular, a simple and easy method of recording precise data for further generation of an avatar of a user shall be presented.

This task is solved by the devices and methods defined in the independent patent claims. Further embodiments result from the dependent patent claims.

A first aspect of the invention is a method for recording of data of a user for generating an avatar comprises recording a plurality of images representing different poses of a user's head, and preferably, recording a plurality of images with different facial expressions of the user. For recording the poses of a user's head, the orientation of the user's head is observed continuously by a camera and at least one high-resolution image is automatically recorded when preset orientations of the user's head are reached.

Since the high-resolution image is automatically recorded when the user's head is oriented correctly, the user does not have to take care of the actual recording. Therefore no misalignment or movement due to triggering the recording button occures. Also since the recording is triggered automatically, the recording process is faster and the user needs less time to record the required images. Also it is convinient for the user to continuously move his head to the orientation required. The user can move his head slowly without interrupting his movement, Therfore multiple recordings can be taken during one slow movement of the users head.

A further aspect to the present invention is related to a method for recording of data of a user for generating an avatar, preferably as mentioned previously, comprising recording a plurality of images representing different poses of a user's head, and recording a plurality of images with different facial expressions of the user. Thereby different recording modes are used for recording the images representing different poses and for recording the images with different facial expressions. In particular static recording for recording the images representing the different poses and dynamic recording for recording the images with different facial expressions is used.

By using different recording modes, the modes can be adapted to the requirements of the actual recording. For the recording of the images representing different poses of the user's head the static recording of a photo image can be preferred while for the dynamic recording of the different facial expressions of the user a preferably continuous video is recorded. Normally a recording device has higher resolution capabilities for recording static photos than for recording dynamic videos. Based on the higher resolution photo images of the different poses of the user's head a basic avatar representing the user can be created. The dynamic video images of the different facial expressions of the user are used for adapting the basic avatar to the user's expressions which requires less data. Although the recording of the different facial expressions could be performed using the same recording mode, it is more convinient for a user when the images of the different facial expressions are recorded dynamically as a video. Also the use of lower resolution images helps to reduce the storage capacity required.

A further aspect of the present invention is a method for recording of data of a user for generating an avatar, preferably as described before, comprising recording a plurality of images representing different poses of a user's head, and preferably, recording a plurality of images with different facial expressions of the user. For recording the plurality of images representing different poses of a user's head, between 6 and 14, preferably between 7 and 12, particularly preferably between 8 and 10, poses of a user's head at different angular orientations are recorded.

For the generation of an avatar a number of images of the user's head at different angular orientations are required. Basically the more images available, the more detailed the avatar can be generated. It has been found that less than 6 images only allow the generation of a raw model with low details of an avatar while a huge number of images requires more calculation capacity in order to create the avatar based on these images. It has been found that an optimum between calculation capacity and details to be extracted lies between 6 and 14 images. However it has to be mentioned, that the number of images also need to represent multiple orientations of the user's head.

Preferably images of the user's head should comprise images for taken from the front of the users face as well as images taken from the left and the right side of the user's head. It is further preferred to also include images from the user's head looking down and up. By including images not only from the left and right but also from up and down, more information of the user's head is available. Therefore the avatar can be better adapted to the real world.

Preferably at least one image is taken from the front of the user's head and three images are taken from each side of the user's head at different orientations as well as one image from looking down and from looking up. In order to generate an avatar as close as posible to the realistic person, it is crucial to record images with small angular variations. However, since movements of the head to the left and to the right are easier and cover a wider angular range than up and down, more images to each side are recorded. Also the views of the uper and lower side of a persons head bear less information than the views of the left and right sides. A good choice of images comprise recordings at angular orientation of the persons head from left to right at -60°, -30°, -10°, 0°, 10°, 30°, 60° and from upper to lower side at -22.5°, 0°, 22.5°. The images taken at 0° left/right can be used as the image at 0° upper/lower such that this image need to be recorded only once.

The user can be guided to adapt his pose as required. Frames can continuously be captured in real-time and shown to the user on a screen, eg. the screen of the recording device. For each frame, the head pose of the user can be estimated using a head-pose-estimation algorithm. Methods for head pose estimation may involve:
- End-to-end deep learning models for head pose regression,
- Face tracking algorithms based on landmark detection.

A further aspect of the present invention is related to a method for recording of data of a user for generating an avatar, preferably as decribed previously, comprising recording a plurality of images representing different poses of a user's head, and preferably, recording a plurality of images with different facial expressions of the user. The method comprises the further steps of determining an illumination of an environment and generating and outputting user instructions for guiding the user, preferably before the first recording, to find a position with optimal illumination of the user's face.

An optimal illumination of an object is a basic requirement in order to achieve good quality recording of images. Also the images of the user's face sould be recorded using optimal illumination under the given circumstances. By determining the illumination of the environment and instructing the user to adjust his position and the position of his face, the optimal illumination can be found and used.

The frames of the user's face can be captured in real time and a light incidence angle can be estimated based on reflecting light from the face. This allows a continous instruction of the user to optimize the position. Any deviation from the optimal position is recognised immediately and the user can be instructed to react accordingly. This process can be iteratively repeated, guiding the user to an optimal position.

Possible methods to determine the light incidence from the user's face may include:
- using photometric stereo techniques,
- analyzing the shadows and highlights on the face using image processing algorithms,
- employing machine learning models trained to estimate lighting conditions from facial features.

A further aspect of the present invention is a method for recording of data of a user for generating an avatar, preferably as described peviously, comprising recording a plurality of images representing different poses of a user's head, and preferably, recording a plurality of images with different facial expressions of the user. The method comprises the further steps of generating and outputting user instructions to the user to adjust his head's position relative to a recording device such that his face is positioned in a central detection area of the recording device.

Todays recording devices show the best resolution and recording accuracy in a central detection area. The quality of recording is reduced closer to an edge of the detection area. This is basically a result of the lense system used in the detection device. Additionally the user perferably is positioned relatively close to the recording device to get the best possible resolution of his recorded head. Also the distance to the recording device has to be chosen such that turning the users head still ensures that the head is fully visible in the picture, with no part of the head cropped. The postion of the user's head can be detected and a deviation from the center be determined. Instructing the user to center his head position relative to the detection area helps to prevent distortion of the image recorded. The user can be instructed to move his head up, down, left, right and also closer or farther away from the recording device.

The frames of the user's face can be captured in real time and a silhouette of the user's head can be determined. The position of the silhouette of the user's head can be compard to a target silhouette and based on the deviation the user can be instructed to move his head in the required direction in order to bring together both silhouettes. The target silhouette can be overlayed onto the captured frames and/or the silhouette determinde of the user's head and and displayed on a screen of the recording device.

To determine the head's position and size in the frame, a face detection algorithm can be employed, with several potential options, such as:
- the Viola-Jones object detection framework,
- deep learning-based methods like the Single Shot Multibox Detector (SSD) and You Only Look Once (YOLO),
- multi-task Cascaded Convolutional Networks (MTCNN),
- Haar Cascade Classifiers, suitable for real-time applications,
- advanced techniques like Faster R-CNN or Region-based Convolutional Neural Networks (R-CNNs).

It is possible to colour the silhouette determinded of the user's head depending on the alignment level to the target silhouette. This colour coding for example indicates poor, good and optimal alignment by the colours red, yellow and green. However different colours are feasible.

For the recording of the poses, high-resolution photos can be taken. As high resolution it is understood to have a resulotion of at least 750 pixels in the with of the user's face and 1250 pixels in the height. High resolution photos allow creating an avatar which more precisely represents the real user's face. Although higher resolution images would allow to even more precisely create an avatar, an optimum between resolution and amount of data to be handled must be found. Also commercially available recording devices need to be capable to capture images having the required resolution. It has been found, that pictures of user's faces having a resolution as mentioned above alows satisfying avatar creation.

High-resolution images can be captured along with optional data such as:
- depth data,
- semantic segmentation,
- intrinsic camera parameters,
- camera pose from tracking and/or motion sensors,
- camera parameters like exposure, aperture, ISO, etc.

For the recording of the poses, user instructions to the user can be generated and output, to guide the user to show a neutral facial expression. Recording images of the user with neutral facial expression allows creation of a basic avatar representing the user's head. A neutral facial expression as herein understood is a face that shows neither positive nor negative emotions. It's essentially a blank or impassive expression, where the facial muscles are relaxed and not conveying any particular emotion such as happiness, sadness, anger, or surprise.

The facial expression can be permanently observed and deviation from a neutral facial expression can be recognised. Such deviation can be used to alert the user and remind him to show a neutral facial expression. The user's facial expression may be tracked using a face tracking algorithm. Methods for face tracking may include:
- end-to-end deep learning models trained to recognize and track various facial expressions,
- face tracking algorithms based on landmark detection.

The user's motion can also be analyzed. If the user moves too quickly, it is possible to trigger alerts, instructing the user to move slower to avoid motion blur.

For the recording of the facial expressions, user instructions to the user can be generated and output to guide the user to show various specific facial expressions. Such specific facial expressions can comprise smile, laugh, surprised, happy, sad, angry, eyes closed. However, other expressions are possible.

The facial expression of the user can be permanently observed and compared to predefined target expressions. When the preset target expression is reached and recorded, user instructions to the user can be generated and output to guide the user to show a different specific facial expression.

The recording can be performed by means of a mobile recording device, preferably a handheld device, particularly preferably a mobile phone. Today, mobile phones such as smartphones are omnipresent and most of them have a camera intergrated beeing able to capture high-resolution images as well as videos. Therefore no special equipment is required for performing the invention. Of course, professionally available camera equipment can be used as well.

A further aspect of the present invention is a method for generating an avatar of a user, comprising a method as described previously and further comprising the steps of
- transmitting the recorded data from a recording device to a computing unit for generating data for representation of an avatar based on the recorded data,
- receiving the data for representation of the avatar by the recording device,
- displaying an image of the generated avatar on the recording device or transmitting representation of the avatar to an external device.

Since the recorded data is transmitted from a recording device to a computing unit, which might be external, the recording device does not need to have large processing power. The generation of the avatar is performed in the computing unit based on the recorded data transmitted from the recording device. The computing unit can be part of a high-performance super computer. It is also feasible to use cloud computing capabilites. After having created the avatar in the computing unit, the data for representation of the avatar is transmitted to and received by the recording device. Based on this data, the recording device can display an image of the avatar on a screen of the recording device or on a screen connected to the recording device. It is also possible that the data for representation of the avatar is forwarded by the recording device to an external device. The external device could be a gaming computer or gaming console, which integrates the avatar from the data into an application.

The displayed avatar can be adapted to a recording of the user and/or can mirror the users facial expression and pose. The user therefore gets the chance to check the behaviour of his avatar.

A live preview of the avatar, based on a continuous recording of the user, can be displayed. Such a continuous preview allows the user to directly see his reaction and facial expression and/or integrate a more lively representation of the users avatar in an application.

The data for representation of an avatar can comprise mesh and texture of the avatar and optionally a rig, blend-shapes and hair strands.

A further aspect of the present invention is a computer program product comprising instructions which, when the program is executed by a computer, cause the computer to carry out the method as previously described.

With reference to figures, which are merely examples of embodiments, the disclosed invention is explained in more detail below. They show:
- Figure 1:: a possible sequence of method steps,
- Figures 2a to 2g:: a visual sequence of a tutorial for the user,
- Figures 3a to 3c:: a visual sequence guiding to user to the best available light,
- Figures 4a to 4c:: a visual sequence guiding the user to level the recording device,
- Figures 5a to 5d:: a visual sequence guiding the user to correctly align in front of the recording device,
- Figures 6a to 6f:: a visual sequence guiding the user and recording different poses of the user,
- Figures 7a to 7d:: a visual sequence guiding the user and recording differnet facial expressions of the user,
- Figures 8a to 8d:: a visual sequence of a live preview of an avatar created.

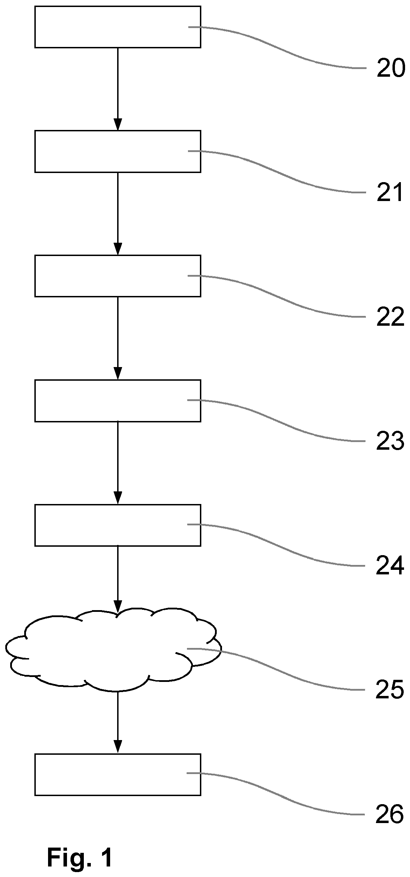

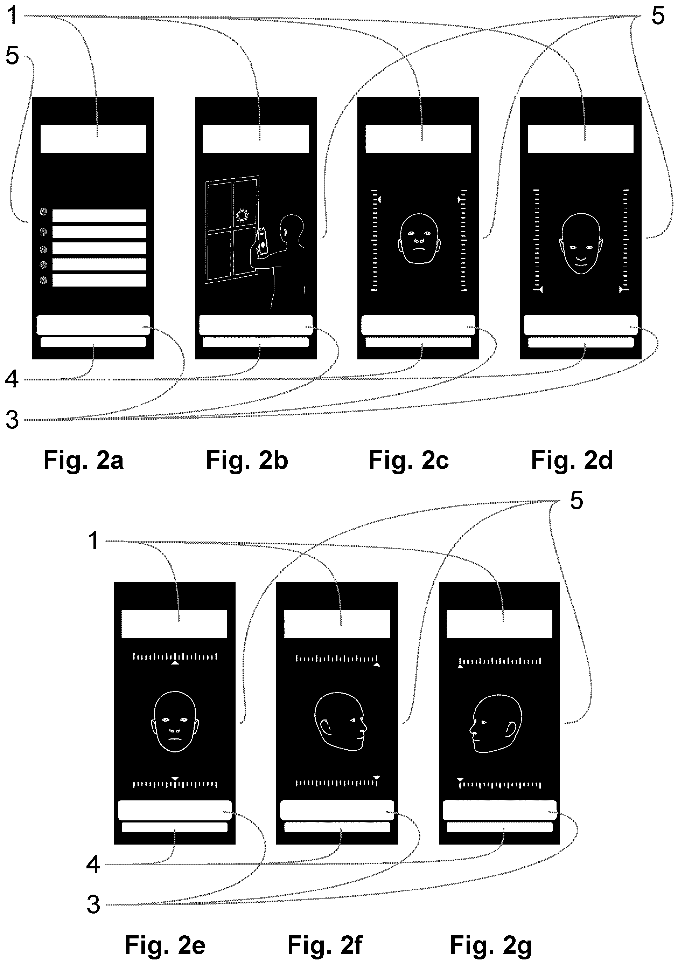

In figure 1 a possible sequence of method steps is shown. As a first step a tutorial 20 explains how the proces of recording data and generation of an avatar works. Also the tutorial 20 gives information about restrictions and recommendations on how to get best results. The tutorial can comprise multiple screens that can be shown in sequence. The tutorial can also be skipped. Further details of the tutorial 20 are explained with regard to figures 2a to 2g below.

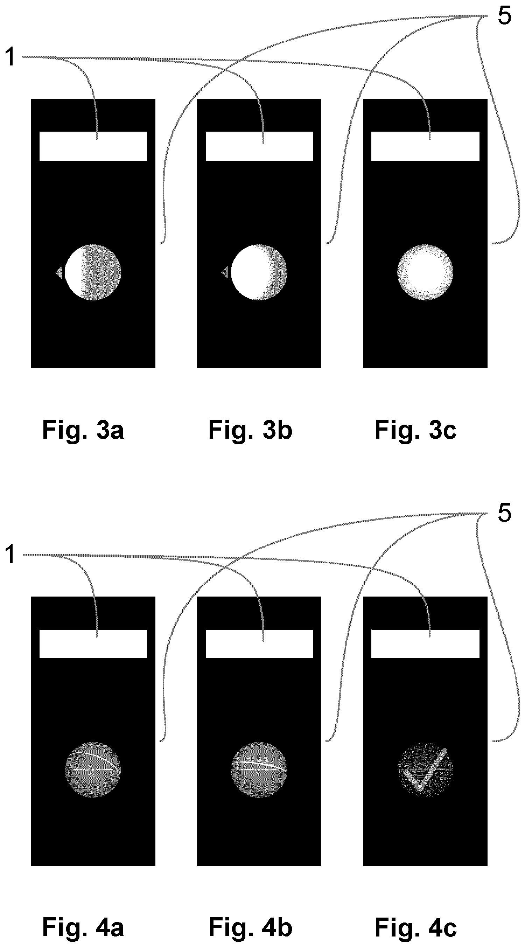

After the tutorial 20 the user is guided through the light guidance module 21. Here the user is directed to the best available light setting in order to get good data for the avatar creation. Details are explained with regards to figures 3a to 3c.

An additional alignement step 22 is followed to instruct the user to hold the recording device at the correct position in relation to a horizontal alignment and to his face. Details are discussed with respect to digures 4a to 4c and 5a to 5d respectively.

Now the actual recording of the data starts be the angle/pose recording 23. Here a plurality of images representing different poses of a user's head are recorded. For details refer to fig-ures 6a to 6f.

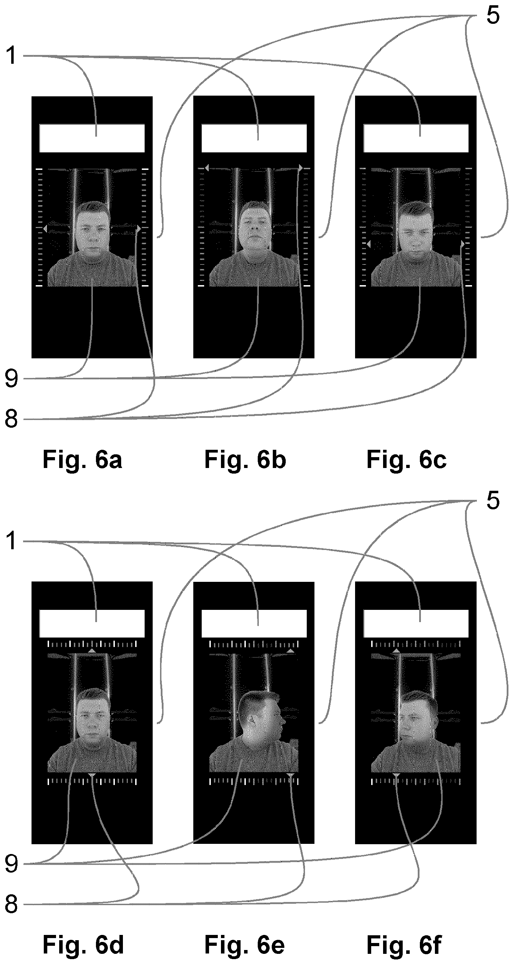

Additional data is gained using expression recording 24. The user is guided to show various emotional expressions such as surprise, happiness, sadness. Details hereto are given regarding figures 6a to 6d.

When the relevant data is recorded, the generation of the avatar 25 is performed preferably in an external computing unit. The recorded data is transmitted from the recording device to the computing unit. Normally the process of generating an avatar requires large processing power. This task can for example be performed using a high-performance supercomputer or using cloud computing.

When the avatar is created from the data transmitted, the data representing the avatar is sent back to the recording device for display. Alternatively, or additionally the avatar data can also be transmitted to a third device, e.g. a computer or a gaming console.

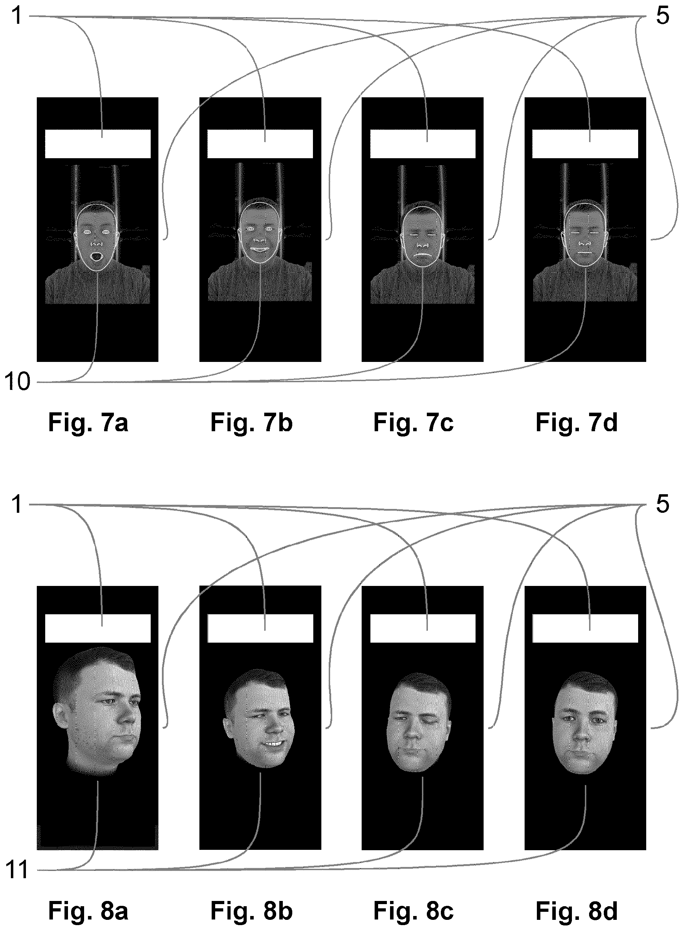

Having received the data representing the avatar, the avatar can be displayed on a screen, preferably on the screen of the recording device, as an avatar live preview 26. The face of the user might continuously be recorded and the expression and pose of the avatar be adapted in real time. Further details are given below to figures 8a to 8d.

Figures 2a to 2g shows a visual sequence of a tutorial for a user. Since the recording of data of a user for generating an avatar has some restrictions and needs good interaction with the user, prior to recording perferbly the user is informed what to expect and which interaction is required. Such information can be given in the form of a short tutorial at the very beginning of the recording. It is also feasible to inform the user stepweise before each recording step.

Normaly a simple handheld device, e.g. a smart phone can be used both for the tutorial as well as for the recording of the data. The display of the recording device can be divided into three areas such as an information area 1, an visualization area 5 and a command area. In the example given in figures 1, the command area displays two buttons, a continue button 3 and a skip button 4. However, the command area can also comprise further and/or different buttons.

As shown in figure 2a, the visualization area 5 displays a checklist with instructions to a user to be kept in mind. The single points of the checklist can be ticked individually or be confirmed by pressing the continue button 3. Of course it is also possible to be foreseen, that the continue button 3 only becomes active, when all points of the checklist are ticked. Possible points of the checklist can include the information, that the best light conditions are close to a window during daytime, that best results will be achieved if long hair is tied back such that the ears are visible, that glasses should whenever possible not be worn, that during the recording absence of other instructions a neutral face expression should be shown and that movements shall be performed slowly. Additional general information might be given.

In figure 2b a visalization of the information to perform the recording close to the window can be displayed in the visualization area 5. The information area can inform the user to turn towards the brightest light and to stand ideally in front of a window. Further information might include to hold the recording device straight in front of the user's face and to align the head with the camera of the recording device.

Figures 2c and 2d inform the user, that his head needs to be slowly tilted forward and backwards during the recording process and that the correct orientation might be indicated by indicators changing its colour to become green.

Similar information is given in figures 2e to 2g with regard to turning the head left and right. The correct orientatin again might be indicated by colour changing of respective indicators.

When the user has finished the turorial either be going through the complete sequence or by skipping the tutorial, the best available light conditions need to be found.

Figures 3a to 3c show a visual sequence guiding to user to the best available light. Again in the information area 1 of the recording device, user is informed on what to do, e.g. to turn to the brightest light. The visualization area 5 might indicate by an arrow which direction the user should turn. Additionally this instruction might be visualised by a circle being brighter on one side while the other side remains dull. The movement of the user can be tracked live and indicating any improvement as shown in figure 2b. As soon as the light conditions are optimised, the arrow no longer is displayed and the circle is uniformly displayed as shown in figure 2c.

The user might also be guided to hold the recording device leveled and oriented in front of his face. Any deviation might be indicated in the visualization area 5 as shown in figures 4a to 4c. The information area 1 might display a text to align the recording device with the horizon. Good leveling and orientation of the recording device can be indicated as shown in figure 4c.

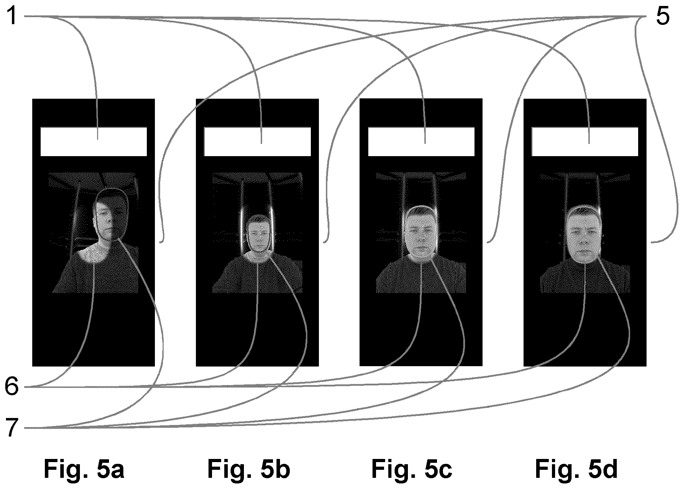

Not only the horizontal alignment and orientation of the recording device is important. Figures 5a to 5d show a visual sequence guiding the user to correctly align his head in front of the recording device. Usually when starting recording, the user's face will be off centered to the recording device. The central area or target silhouette 6 can be indicated in the visualization area 5 of the recording device by a light frame respectively by darkening the area outside of the center. The recording device further can display a picture of the user's face together with a user's silhouette 7 calculated from the picture, see figure 5a. The information area 1 might display guidance to bring the user's silhouette in alignment with the target silhouette. In figure 5a there might be an information to center the face on the screen.

When the face is centered in the target area 6, the recoreding device might indicate whether or not the distance to the camera is correct. As shown in figure 5b, the user's silhouette 7 is smaller than the target silhouette 6. In the information area 1 might be a comment to bring the recording device closer to the user's face.

In figure 5c the alignement of the target silhouette 6 with the user's silhouette 7 is better than before. While in figure 5d the alignment is perfect. The quality of alignment can also be indicated using different colours for the user's silhouette 7. The colour might change from red for bad alignment to yellow for moderate and green for good alignment.

Guiding the user through the relevant recording of different poses of the user is shown in figures 6a to 6f. While looking at the recording device, a user's mirror image is diplayed in the visualization area 5 of the device. The information area 1 or figure 6a guides the user to slowly tilt his head backwards and forward until all indicators are displayed green. The actual pose of the user's head is indicated by a pose indicator 8 pointing to a ruler, see figure 5a. As soon as the user's head is tilted upwards (figure 6b) or downwards (figure 6c), the pose indicator 8 moves on the ruler. Whenever a preselected tilting angle is reached, the camera takes a high-resolution photo automatically.

When the tilting of the user's head has finished and photos of the correct poses have been taken, the user is guided to slowly turn his head left and right until all incators are displayed green, starting from looking straight as shown in figure 6d. Multiple high resolution pictures are taken automatically at predefinded angles from either side as shown in figures 6e and 6f.

Figures 7a to 7d show a visual sequence guiding the user to show differnet facial expressions and recording them. On the visualization area 5 schematical target face expressions 10, such as looking surprised (figure 7a), looking happy (figure 7b), looking sad (figure 7c) and having the eyes closed (figure 7d) are displayed, while in the information area a corresponding text is displayed. As soon as the user shows an expression as required, the next target facial expression is displayed. During this procedure, a permanent video is recorded and the user's mirror image is displayed in the background. It is also possible to display the target facial expression in one colour and as soon as the user's expression matches the the target, the colour changes to e.g. green indicating that the correct expression is met. The next target facial expression then again is displayed in the first colour until copied by the user.

In figures 8a to 8d a visual sequence of a live preview of an avatar created is shown. After having created the avatar, data for representation of the avatar has been received in the recording device. While the recording device still continuously records the face of the user, the avatar displayed in the visualisation area 5 is permanently adapted accordingly to mirror the user's expression and pose. This avatar live preview 11 allows the user to check the quality of the avatar generated. The information area 1 can be blank or state that a live preview of the avatar is shown.

## Claims

1. **A method for recording of data** of a user for generating an avatar comprising:
- recording a plurality of images representing different poses of a user's head,
- preferably, recording a plurality of images with different facial expressions of the user
wherein for recording the poses of a user's head, the orientation of the user's head is observed continuously by a camera and at least one high-resolution image is **automatically recorded** when preset orientations of the user's head are reached.

2. **A method for recording of data** of a user for generating an avatar, preferably according to claim 1, comprising:
- recording a plurality of images representing different poses of a user's head,
- recording a plurality of images with different facial expressions of the user
wherein **different recording modes** are used for recording the images representing different poses and for recording the images with different facial expressions, in particular static recording for recording the images representing the different poses and dynamic recording for recording the images with different facial expressions.

3. **A method for recording of data** of a user for generating an avatar, preferably according to claim 1 or 2, comprising:
- recording a plurality of images representing different poses of a user's head,
- preferably, recording a plurality of images with different facial expressions of the user
wherein, for recording the plurality of images representing different poses of a user's head, between 6 and 14, preferably between 7 and 12, particularly preferably between 8 and 10, poses of a user's head at different angular orientations are recorded.

4. **A method for recording of data** of a user for generating an avatar, preferably according to one of the preceding claims, comprising:
- recording a plurality of images representing different poses of a user's head,
- preferably, recording a plurality of images with different facial expressions of the user
wherein the method comprises the further steps of
- determining an illumination of an environment
- generating and outputting user instructions for guiding the user, preferably before the first recording, to find a position with optimal illumination of the user's face.

5. Method according to claim 4, wherein frames of the user's face are captured in real time and a light incidence angle is estimated based on reflecting light from the face.

6. **A method for recording of data** of a user for generating an avatar, preferably according to one of the preceding claims, comprising:
- recording a plurality of images representing different poses of a user's head,
- preferably, recording a plurality of images with different facial expressions of the user
wherein the method comprises the further steps of
- generating and outputting user instructions to the user to adjust his head's position relative to a recording device such that his face is positioned in a central detection area of the recording device.

7. The method according to one of the preceding claims,
wherein for the recording of the poses, high-resolution photos are taken.

8. The method according to one of the preceding claims,
wherein for the recording of the poses, user instructions to the user are generated and output, to guide the user to show a neutral facial expression.

9. The method according to claim 8, wherein the facial expression is permanently observed and deviation from a neutral facial expression is recognised.

10. The method according to one of the preceding claims,
wherein for the recording of the facial expressions, user instructions to the user are generated and output to guide the user to show various specific facial expressions.

11. The method according to claim 10, wherein the facial expression of the user is permanently observed and compared to predefined target expressions, wherein when the preset target expression is reached and recorded, user instructions to the user are generated and output to guide the user to show a different specific facial expression.

12. The method according to one of the preceding claims,
wherein the recording is performed by means of a mobile recording device, preferably a handheld device, particularly preferably a mobile phone.

13. **A method for generating an avatar** of a user, comprising a method according to one of the preceding claims, comprising the steps of
- transmitting the recorded data from a recording device to a computing unit for generating data for representation of an avatar based on the recorded data,
- receiving the data for representation of the avatar by the recording device,
- displaying an image of the generated avatar on the recording device and/or transmitting the data for representation of the avatar to an external device.

14. The method according to claim 13, wherein the displayed avatar is adapted to a recording of the user and/or mirrors the user's facial expression and pose.

15. The method according to claim 13 or 14, wherein a live preview of the avatar, based on a continuous recording of the user, is displayed.

16. The method according to one of claims 13 to 15, wherein the data for representation of an avatar comprise mesh and texture of the avatar and optionally a rig, blend shapes and hair strands.

17. **A computer program product** comprising instructions which, when the program is executed by a computer, cause the computer to carry out the method of one of the preceding
